# EUROPÄISCHE PATENTSCHRIFT

(11) **EP 3 436 877 B1**
(45) Veröffentlichungstag und Bekanntmachung des Hinweises auf die Patenterteilung: **30.09.2020**
(21) Anmeldenummer: 17713220.6
(22) Anmeldetag: 22.03.2017
(51) Int. Cl.: G05B 19/406, G05B 23/02, G01H 1/00

(54) **VERFAHREN ZUR SCHWINGUNGSDIAGNOSTISCHEN ÜBERWACHUNG EINER MASCHINE**
METHOD FOR CONDUCTING A VIBRATION DIAGNOSTIC MONITORING OF A MACHINE
PROCÉDÉ DE SURVEILLANCE ET DE DIAGNOSTIC D'UNE MACHINE PAR ANALYSE DES OSCILLATIONS

(30) Priorität: 31.03.2016 DE 102016105877
(43) Veröffentlichungstag der Anmeldung: 06.02.2019
(73) Patentinhaber: Fibro GmbH, 74189 Weinsberg (DE)
(72) Erfinder: KNAUP, Markus, 71549 Auenwald (DE)
(74) Vertreter: Staeger & Sperling Partnerschaftsgesellschaft mbB
(86) Internationale Anmeldenummer: PCT/EP2017/056791
(87) Internationale Veröffentlichungsnummer: WO 2017/167616

(56) Entgegenhaltungen:
- EP-A1- 1 338 873
- EP-A2- 1 081 567
- DE-A1- 19 702 234

## Beschreibung

Die Erfindung betrifft ein Verfahren sowie eine Vorrichtung zur Durchführung eines Verfahrens zur schwingungsdiagnostischen Überwachung und Beurteilung von einzelnen Maschinenteilen, wie z. B. einem Lager, einem Getriebe, einem Motor, einer Ausrichtung, einer Unwucht und dergleichen einer Maschine, einer Bearbeitungs- oder Handhabungsvorrichtung oder einer Anlage, wie einer Werkzeugmaschine oder Teilen einer Werkzeugmaschine, wie einem Drehtisch, wobei insbesondere diskontinuierlich arbeitende Maschinen, wie ein Schrittschalttisch analysiert werden können.

Im Stand der Technik sind bereits diverse Verfahren bekannt, um Diagnosen und Vorhersagen zur Fertigungsmaschinen oder Produktionsanlagen zu treffen. Aus der EP 1 338 873 A1 ist eine Lösung bekannt, um Anomalien bei einer Maschine zu erkennen. Die Anlagenverfügbarkeit einer Maschine, wie z. B. eines Drehtisches stellt einen wichtigen Faktor für die wirtschaftliche Nutzung dieser Einrichtung dar.

Die Hauptaufgabe eines Verfahren zur Überwachung des Zustandes von insbesondere rotierenden oder drehbaren Maschinen besteht darin, möglichst ohne Betriebsunterbrechung eine Beurteilung des aktuellen Maschinenzustandes, der Belastung der Maschine und jeglicher Veränderungen des Maschinenzustandes zu ermöglichen. Unter Maschinenzustand versteht man dabei die Bewertung des technischen Zustandes der Maschine auf der Basis der Gesamtheit der aktuellen Werte aller Schwingungsgrößen und Betriebsparameter.

Durch vorbeugende Instandhaltung und Erfahrungswerte können die Verfügbarkeiten der Produktionsanlagen verbessert und gleichzeitig die Ausfallzeiten der Anlagen sowie die Kosten der Instandhaltung reduziert werden. Nachteilig ist dabei, dass es selten möglich ist, genaue Vorhersagen über den Zustand und den Zeitpunkt des Ausfalls von Maschinenteilen, Lager oder Verschleißteilen zu treffen. Ferner ist es bei der vorbeugenden Instandhaltung immer wieder der Fall, dass Teile ausgetauscht werden, die noch über eine hohe Reststandzeit verfügen.

Eine alternative Form der Instandhaltung kann in der zustandsbezogenen Instandhaltung gesehen werden. Die zustandsbezogene Instandhaltung setzt eine zuverlässige und regelmäßige Ermittlung des Maschinenzustands voraus. Die dafür entwickelten und im Stand der Technik verfügbaren Mess- und Auswerteverfahren dienen der Überwachung und Auswertung von Prozess-parametern und Maschinenkennwerten, wie z. B. Temperatur, Druck, Drehmoment oder elektrische Stromdaten. Häufig wird auch die Schwingungsanalyse zur Maschinendiagnose eingesetzt. Mit einer derartigen Analyse ist es möglich, Schäden bereits im Frühstadium zu erkennen und zu diagnostizieren, um Folgeschäden zu vermeiden.

So sind beispielsweise Verfahren zur Überwachung Beurteilung von sich kontinuierlich bewegenden und/oder rotierenden Maschinenteilen, insbesondere von Maschinenlagern, durch Analyse von Schwingungsmustern bekannt. Die dafür notwendigen Schwingungsüberwachungssysteme messen die Vibration der sich über einen längeren Zeitraum hin rotierenden Maschine und geben zum Beispiel eine unmittelbare Fehlermeldung bei Grenzwertüberschreitung des Summenschwingungspegels an.

Als diskontinuierliche Bewegungsabläufe sind solche Bewegungen von Maschinen zu verstehen, die sich nur über einen bestimmten Bewegungspfad bewegen, wie z. B. das Drehen eines Drehtisches um einen Winkel von 30°, 45°, 90° oder 120° und dergleichen. Hierbei kann z.B. auch ein Hub einer Presse gemeint sein, der sich von einem Stanzwerkzeug unterscheidet, welches z.B. eine Vielzahl von Hüben pro Minute dauerhaft oder über einen längeren Zeitraum ausführt. Ganz allgemein wird unter einer diskontinuierlichen Bewegung ein Bewegungsmuster verstanden, welches nur wenige oder weniger als eine Periode einer Bewegungswiederholung zeigt, während für kontinuierlich bewegte oder rotierende Maschinen eine für die Bewegung charakteristische Kennzahl wie Drehzahl, Hubzahl oder dergleichen angegeben werden kann und üblicherweise die Bewegung über eine Mehrzahl oder Vielzahl von zusammenhängenden Bewegungsphasen erfolgt.

Als diskontinuierlich ist daher auch eine Bewegung zu verstehen, welche durch eine Vielzahl an Bewegungsphasen gekennzeichnet ist, die aber nicht zusammenhängend sind, sondern jeweils durch eine Bewegungspause voneinander getrennt sind.

Nachteilig ist bei dem oben beschriebenen Verfahren, dass einerseits erst beim konkreten Überschreiten von Grenzwertparametern lediglich eine Detektion erfolgt und andererseits auch schwer einzuschätzen ist, woher das geänderte Schwingungsverhalten stammt. Die vermutete Ursache einer Fehlermeldung lässt sich häufig nur schwer mit der tatsächlichen Ursache in Verbindung bringen.

Solche einfachen Kennwerte des Schwingungssignals lassen demnach keine zuverlässige Aussage über den Zustand von Maschinenteilen und Lagern in einer Maschine zu und erst recht keine Vorhersage. Bei komplexen Maschinen, die jeweils mehrere rotierende Bauteile und Antriebe nebeneinander vereinen, ist eine zielgerichtete Überwachung kaum möglich. Ferner sind auch frühzeitige Aussagen über einen in Zukunft zu erwartenden Fehler zu diagnostizieren, die mit einem solchen Verfahren allerdings nicht möglich sind.

Der zu erwartende Maschinenzustand einer diskontinuierlichen Bewegung kann mit den bekannten Verfahren nicht ermittelt werden. Aufgrund des komplexen Bewegungsmusters, lassen sich für vergleichsweise kurze Bewegungsphasen die bekannten Prognoseverfahren nicht anwenden.

Die Zusammenhänge zwischen Schwingungsverhalten der diskontinuierlich bewegten Maschine und den Betriebsparametern sind aus den im Stand der Technik bekannten Verfahren leider nicht ermittelbar. Ferner ist für die Schwingungsgrößen der unterschiedlichen Betriebszustände eine hohe Anzahl an Parameter vorzugeben, was zu einer großen Datenmenge und einem erheblichen Berechnungs- und Analyseaufwand führt.

Es ist ausgehend vom Stand der Technik daher Aufgabe der vorliegenden Erfindung, die vorbesagten Nachteile zu überwinden und ein einfacheres, weniger aufwendiges und zuverlässigeres Verfahren zur Überwachung einer Maschinencharakteristik vorzunehmen und insbesondere eine optimierte Beurteilung des aktuellen als auch des zukünftigen Maschinenzustandes zu erhalten, der sich auf diskontinuierlich bewegte Maschinen anwenden lässt, insbesondere auf Schrittschalttische.

Diese Aufgabe wird durch die in Patentanspruch 1 angegebenen Merkmale gelöst.

Mit dem erfindungsgemäßen Verfahren zur schwingungsdiagnostischen Überwachung einer diskontinuierlichen Bewegung wird es möglich, automatisch Abhängigkeiten der Schwingungen für bestimmte Betriebsparametern zu ermitteln und für diese Maschine anzuzeigen. Besonders vorteilhaft kann die Erfindung bei sich um einen bestimmten Winkel drehenden Maschinen, wie Rundschalttischen eingesetzt werden. Die Erfassung des Schwingungsverhaltens und die Analyse der individuellen Beiträge der Maschinenteile zur komplexen Schwingung der gesamten Maschine führen zu einem gezielten Aufschluss über die Ursachen der Schwingungen und deren Veränderungen.

Erfindungsgemäß ist daher vorgesehen, dass das komplexe gemessene Schwingungsmuster einer Spektralanalyse dergestalt unterzogen wird, dass der jeweilige Schwingungsanteil eines zu überwachenden Maschinenteiles daraus extrahiert wird. Hierdurch ist es erfindungsgemäß möglich mit nur einem Sensor eine Vielzahl von Maschinenteile gleichzeitig zu überwachen und Änderungen in dem komplexen Messsignal, dennoch eindeutig einem bestimmten Maschinenteil z. B. einem Wälzlager oder einem Getriebe zuzuordnen.

Eine bevorzugte erste Möglichkeit einer Analyse und Prognose liegt in der Verwendung von Referenzmodellen. Dies wird im Folgenden anhand einer Unwucht (Exzentrizität) näher erläutert. Hierzu werden für den Anwendungsfall rotationswinkelabhängiger oder für getaktete diskontinuierliche Bewegungen ein entsprechendes Referenzmodell entworfen. Das Referenzmodell mit den Schwingungs-Peaks (Pi) einer Frequenzkurve wird für jeden Peak P in eine Funktion der Form f(P1) = α P1 + ß gefasst, um diese mittels den Methoden der Regressionsanalyse zu analysieren. Der entsprechende Wert W_{EXT} für die entsprechende Unwucht entspricht daher dem Ergebnis aus dem Faktor α P1, der für die Einflußfaktoren der Variablen steht und dem Faktor β der einer Störgröße entspricht. Der Zusammenhang zwischen dem Wert (W_{EXT}) und dem jeweiligen einzelnen Peak Pi der Frequenzkurve wird z. B. in einer Grafik aufgetragen oder einem Datensatz gespeichert. Durch den Einfluss von Geschwindigkeit, Position, Temperatur und anderen Variablen erhält man für jeden Einflussfaktor einen Wert (W_{EXT}). Das validierte Modell kann zur Prognose herangezogen werden. Häufig wird neben dem prognostizierten Wert auch ein Konfidenzintervall angegeben, um so die Unsicherheit der Prognose abzuschätzen.

Erfindungsgemäß wird die diskontinuierliche Bewegung in mindestens drei Bewegungsphasen eingeteilt, nämlich eine Beschleunigungsphase vom Ruhezustand bis zum Erreichen einer gleichbleibenden Geschwindigkeit, eine Konstantphase (bei der die Geschwindigkeit der Bewegung gleich oder nahezu gleich ist) und eine Abbremsphase, die vom Zeitpunkt der Reduktion der Geschwindigkeit bis zum Stillstand reicht.

Eine weitere vorteilhafte Ausgestaltung der Erfindung liegt darin, dass die Bewegungsphase auch betreffend der Analyse und insbesondere der Frequenz-Analyse in Teil-FTT Analysen (Fourier-Analysen) erfolgen, so dass jede Phase (Beschleunigung, Konstantphase und Abbremsphase) gesondert und unabhängig von der nachfolgenden Phase analysiert wird, was insbesondere Rechenzeit und Rechenkapazität spart.

Eine weitere ebenfalls bevorzugte Ausgestaltung der Erfindung liegt in der Anwendung einer multivarianten Analyse. Hier werden die Methoden von Regelnetzwerken auf das komplexe Bewegungsmuster einer diskontinuierlichen Bewegung durch Verwendung sogenannter "Fingerprints" implementiert. Zunächst wird hierzu ein Set von Fingerprints angelegt, welche für jeden gewünschten Rotationswinkel und jedes Takten erstellt werden. Der Fingerprint zeigt für jedes Bewegungsmuster ein ganz bestimmtes Verhalten, welches mittels einer multivarianten Analyse ermittelt wird und als "Fingerprint" in einem Referenzdatenspeicher hinterlegt wird. So gibt ein Fingerprint im Vergleich zu den Realdaten im Betrieb eine Aussage über eine Prognose in der Zukunft. Als Fingerprint kann dabei eine Unwucht, ein Crash-Fall, eine Überlast, das Maß der Überlast etc. herangezogen werden und der Betriebszustand mit den spezifischen Frequenzmustern, insbesondere in den unterschiedlichen Bewegungsphasen verglichen werden.

Besonders vorteilhaft ist es, wenn eine Fourier-Reihe zu dem komplexen Schwingungsmusters ermittelt wird und die einzelnen Schwingungsanteile den zu überwachenden Maschinenteilen zugeordnet werden.

Hierzu kann z. B. der Schwingungsbeitrag einer einzelnen Komponente an dem komplexen Schwingungsmuster in einem später noch beschriebenen Teach-Verfahren ermittelt werden. Sobald die daraus generierten Sollwertdaten bzw. Modelldaten vorliegen, können Abweichungen in dem komplexen Schwingungsmuster ebenfalls, vorzugsweise durch Fourierreihenentwicklung, den einzelnen Maschinenkomponenten eindeutig zugeordnet werden.

Erfindungsgemäß wird demnach ein Verfahren zur schwingungsdiagnostischen Überwachung und Beurteilung von einzelnen Maschinenteilen einer Maschine und deren Zustand unter Verwendung wenigstens eines Schwingungssensors, vorzugsweise unter Verwendung weiterer Sensoren mit den folgenden Schritten vorgeschlagen:
a) Diskontinuierliches oder kontinuierliches Messen und Erfassen wenigstens eines Sensorsignals, vorzugsweise eines Zeitsignals x(t) der Schwingung der Maschine (M) bei einer diskontinuierlichen Bewegung mit einem Schwingungssensor (10);
b) Auswerten des oder der Sensorsignale;
c) Vergleich der Sensorsignale mit Sollwertdaten, Modelldaten und/oder Referenzdaten einzelner Maschinenteile (M1, ... Mn);
d) Bereitstellung einer Beurteilungsinformation und/oder einer Warnmeldung für die jeweiligen Maschinenteile (M1, ... Mn), sobald eine Abweichung der aktuell gemessenen Schwingungsdaten von Sollwertdaten oder Modelldaten oder eine mittels einer Extrapolation vorhergesagte Abweichung während der Erfassung bei der diskontinuierlichen Bewegung ermittelt wurde.

Alternativ oder ergänzend können erfindungsgemäß folgende Verfahrensschritte vorgenommen werden:
e) Diskontinuierliches oder kontinuierliches Messen und Erfassen von Zeitsignalen x(t) der (komplexen) Schwingung der Maschine mit einem Schwingungssensor während einer diskontinuierlichen Bewegungsphase der Maschine oder während einem getakteten Betrieb, wobei die Bewegungsphase oder der Takt eine Beschleunigungsphase, eine Konstantphase und/oder eine Abbremsphase umfassen;
f) Auswerten der für die Teilphasen ermittelten Zeitsignals x(t) mittels einer Frequenzanalyse durch einen Analysator, vorzugsweise einen Frequenzanalysator;
g) Extrahieren eines Frequenzspektrums y(f) mit diskreten Frequenzmaxima yₘ(fₘ), wobei die Frequenzmaxima yₘ(fₘ) jeweils einem bestimmten Maschinenteil zugeordnet sind oder werden;
h) Vergleich des extrahierten Frequenzspektrums y(f) mittels eines Komparators mit Sollwertdaten, Modelldaten und/oder Referenzdaten und
i) Bereitstellung einer Beurteilungsinformation und/oder einer Warnmeldung für die jeweiligen Maschinenteile, sobald eine Abweichung der aktuell gemessenen Schwingungsdaten von Sollwertdaten oder Modelldaten festgestellt wurde.

Erfindungsgemäß wird demnach vorgesehen, dass zu jedem sensorischen Wert (z. B.: Temperatur, Druck, Schwingung) zunächst Schwellwerte definiert werden, in denen die Maschine oder Vorrichtung optimal arbeitet. Der Werteverlauf der sensorischen Einzelwerte wird mittels eines Prognoseverfahrens wie zum Beispiel mit der exponentiellen Glättung 1. bis n-ter Ordnung errechnet. Über die Prognose kann die zukünftige Entwicklung der Zeitreihebeschrieben werden. Damit können ggf. der Zeitpunkt des Auftretens und die
Schwere eines möglichen Fehlers im Voraus bestimmt bzw. detektiert werden. Zudem kann die Prognosequalität kontinuierlich durch Vergleich der Prognosewerte aus dem Prognoseverfahren und der Soll/Ist-Werte verbessert werden. Dazu können zum Beispiel in der Prognosefunktion Variablen oder Parameter hinterlegt werden, die initialisiert werden und regelmäßig angepasst werden können.

In einer weiteren vorteilhaften Ausgestaltung der Erfindung können auch einzelne Bewegungsphasen einer Vorrichtung, wie z. B. eines Drehtisches erfasst und analysiert werden. Im Falle von Schwingungsanalysen bei diskontinuierlichen Bewegungen können die einzelnen Schwingungskurven für je eine oder mehrere bestimmte Taktbewegungen des Drehtisches zu einer Gesamtkurve zusammengesetzt werden und anschließend mit den beschriebenen Methoden analysiert und prognostiziert werden. Hierzu wird z. B. ein Prozessor die einzelnen Kurvenpfade zu einem Gesamtpfad zusammenbauen. Dieser Datensatz wird dann in der erfindungsgemäßen Weise weiter behandelt und es können folglich ebenso Prognoseverfahren auf diese Daten angewendet werden.

Ein weiterer Aspekt der vorliegenden Erfindung betrifft die Beziehungsmatrix zwischen den sensorisch erfassten Werten und der Wertekombination. Die sensorischen Eingangswerte, dessen festgelegten Schwellwerte (Sollwerte) und idealen Betriebspunkte bilden den Zustand der Vorrichtung wie z.B. den Zustand eines Rundtisches ab. Dieser Zustand kann "geteached" d.h. eingelernt werden, da sich die idealen Betriebspunkte in der Arbeitsumgebung im Verhältnis zum Werkszustand verändern können. Zudem können sich durch Veränderungen von Betriebsbedingungen, wie Drehzahlen und Belastungen andere optimale Betriebszustände ergeben. Es wird hierzu eine Beziehungsmatrix zwischen den sensorischen Werten und der Wertekombinationen aufgebaut. Ziel ist es bei bestimmen Kombinationen von sensorischen Eingangswerten und dessen Überschreitungen von Sollwerten Aussagen zu den Ursachen bereitzustellen. Erfindungsgemäß wird hierzu ein von den Umgebungsbedingungen Ub₁,..., Ubₙ ein Zustandsraum für die sensorischen Parameter definiert. Der zulässige Zustandsraum kann z. B. durch einen Satz von Matrizen Mᵢⱼ definiert werden, wobei erfasste Abweichungen von einzelnen oder mehreren Matrixelementen innerhalb einer erfassten Matrix mit deren zulässigen Sollwerten der zugehörigen Matrix aus dem Satz von Matrizen Mᵢⱼ verglichen werden und beim Detektieren einer zulässigen Abweichung eine Information generiert wird, die zur regelmäßigen Anpassung der bereits hinterlegten Matrizen verwendet werden. So wird der Satz an Matrizen Mᵢⱼ dynamisch in Abhängigkeit von der Umgebungsbedingung angepasst und können verbesserte Prognosen für das Eintreten von bestimmten Ereignissen oder Defekte genauer getroffen werden. Dieses "lernende" System ist daher nicht von statischen Werten (insbesondere Sollwerte und Prognosewerten), sondern von dynamisch angepassten Werten (Sollwerten und Prognosewerten) geprägt.

In einer alternativen vereinfachten Ausführung der vorliegenden Erfindung kann das Betriebsverhalten und können Prognosen für z. B. einen Drehtisch aus der Messung der Geschwindigkeit gewonnen werden. Da die Geschwindigkeit unmittelbar mit dem Drehmoment im Zusammenhang steht, kann z.B. durch eine Messung der Geschwindigkeit am Abtrieb des Drehtisches eine Aussage (bei Kenntnis des Massenträgheitsmoments) auf das Drehmoment geschlossen werden.

Die Messung kann diskontinuierlich oder kontinuierlich erfolgen. Bei der diskontinuierlichen Messung und Datenerfassung, können Schwingungsmessreihen in bestimmten vordefinierten Abständen für eine ebenfalls vordefinierte Zeit vorgenommen werden. So kann z. B. das Schwingungsverhalten eines Drehtischs während einem bestimmten Bearbeitungsvorgang z. B. alle x Stunden für jeweils die Dauer der Bearbeitung überwacht werden. Mit Erfassen des Zeitsignals x(t) erfolgt demnach die Erfassung der Schwingungsamplituden für einen bestimmten Zeitraum. Die dabei gewonnene komplexe Schwingungskurve wird durch Spektralanalyse von x(t) → y(f) in ihre Schwingungsanteile bei einer bestimmten Frequenz im Frequenzspektrum y(f) zerlegt, wobei f die Frequenz und t die Zeit bezeichnen. Mittels z. B. einer Fourier-Transformation lässt sich daraus eine Frequenzanalyse vornehmen, so dass bestimmte Frequenzmaxima bei bestimmten Frequenzen signifikant hervortreten und diese von einem bestimmten Maschinenteil, wie z. B. dem Drehteller, der Antriebskurventrommel, dem Getriebe, einem bestimmten Wälzlager, etc. herrühren.

Die Zuordnung der Frequenzmaxima bzw. auch der Schwingungsanteile an dem komplexen Schwingungsmuster, kann z. B. durch manuelle Veränderung der Eigenfrequenzen, wie zum Beispiel durch Anbringen eines oder mehrerer Resonatoren oder Schwingungskörpern lokal an einem bestimmten Maschinenteil erfolgen, so dass die Veränderung vor und nach Anbringen des Resonators detektiert werden kann. Auf diese Weise kann der Schwingungsanteil in der komplexen Schwingungskurve unmittelbar für dieses Maschinenteil sichtbar gemacht werden. Es kann beispielsweise auch das Schwingungsverhalten einzelner defekter Bauteile einer Maschine erfasst werden, welches im Teach-Modus der Maschine bzw. in einem Speicher eingespeichert werden. Natürlich kann auch jedes weitere geeignete Verfahren zur gezielten Zuordnung der Schwingungsamplituden nach der Spektralanalyse des komplexen Schwingungsmusters zu den Maschinenteilen verwendet werden.

Grundsätzlich kann in dem sogenannten Teach-Modus (oder Ersterfassungs-Modus) der Schwingungsbeitrag der einzelnen Maschinenkomponenten zum gesamten Schwingungssystem ermittelt werden und die erhaltenen Ergebnisse in einem Speicher abgelegt werden.

Weiter vorteilhaft ist es, wenn für wenigstens einen Betriebsmodus der Maschine zunächst über einen definierten Zeitraum das Schwingungsverhalten der Maschine (M) und deren Maschinenteilen (M1, ..., Mn) erfasst und daraus mittels einer Analyse mit einem Analysator, vorzugsweise einer Reihenentwicklung Sollwertdaten und/oder Modelldaten für einzelne Maschinenteile (M1, ..., Mn) extrahiert und in einem Speicher (S) gespeichert werden.

In einer Ausgestaltung der Erfindung werden demnach für die zu überwachenden Maschinenteile konkret Schwingungsmuster (Modelldaten) bzw. Referenzdaten erfasst und den Maschinenteilen fest zugeordnet. Besonders vorteilhaft ist es, wenn ferner zur Visualisierung der Modelldaten eine Visualisierungsebene vorgesehen wird, deren Daten auf einem Bildschirm darstellbar sind, indem die von dem Schwingungsanalysator gewonnenen spektralen Schwingungsanteile den Maschinenteilen sichtbar zugewiesen sind.

Ein weiterer Aspekt der vorliegenden Erfindung betrifft die Hardwareimplementierung und die Softwareimplementierung. Zur Realisierung der Hardware können herkömmliche Rechner- und Speicherbausteine verwendet werden, welche Daten über eine Schnittstelle empfangen und über diese oder eine weitere Schnittstelle an eine Ausgabeeinheit ausgeben können. Diese Rechner- und Speicherbausteine können bevorzugt in der Hardware des Spektrum-Analysators integriert sein.

Die Software des Spektrum-Analysators ist so beschaffen, dass diese aus einem Schwingungssignal das komplexwertige Frequenzspektrum ermitteln kann. Da ein Spektrumanalysator im Allgemeinen keinen zeitlichen Bezug zu einer Referenzphase und dem gemessenen Signal und dessen Phasenlage herstellen kann, ist es gemäß der Erfindung mit Vorteil vorgesehen nur den Betrag des Frequenzspektrums, das sogenannte Amplitudenspektrum, zu ermitteln.

Als Messmethoden kann z. B. die FFT-Fourieranalyse (Fast Fourier Transform) eingesetzt werden. Je nach Maschinentyp und Komplexität des Schwingungssignals können ferner Signalverstärker, Bandpassfilter und dergleichen zur Aufbereitung des Messsignals verwendet werden.

Die Softwareimplementierung kann durch eine oder mehrere spezifische Applikationen realisiert werden, welche aus dem komplexen Schwingungsmuster mittels einer maschinenteilebezogenen Spektralanalyse ein Frequenzspektrum ermittelt, bei dem die Spektrallinien den Maschinenteilen konkret zugeordnet sind. Ferner kann mit Vorteil ein hardwareimplementierter Rechenalgorithmus für die einzelnen Ermittlungsaufgaben hinterlegt sein.

Betreffend eines ggf. verwendeten Datenprotokolls, kann jedes geeignete Datenprotokoll verwendet werden.

In einer weiteren vorteilhaften Ausgestaltung der Erfindung kann vorgesehen sein, dass die Visualisierungsebene in der Hardware des Analysators integriert ist.

Nach dem Extrahieren eines Frequenzspektrums kann ein Vergleich des extrahierten Frequenzspektrums f(ω) mittels eines Komparators mit Sollwertdaten, Modelldaten und/oder Referenzdaten erfolgen. Aus dem Ergebnis kann eine Ist-Aussage und weiter vorteilhaft, eine Prognose über einen zukünftigen Zustand gemacht werden.

In einer bevorzugten Ausgestaltung der Erfindung ist daher vorgesehen, dass das zeitliche Differential oder die erste Ableitung nach der Zeit des bei der Messung ermittelten Schwingungssignals oder einer davon abgeleiteten Messgröße dazu verwendet wird, eine Prognose über den zukünftigen Zustand eines oder mehrerer der jeweiligen Maschinenteile oder deren Betriebsverhalten, vorzugsweise zu einer bestimmten Zeit in der Zukunft vorzunehmen.

Anders ausgedrückt bedeutet dies folgendes:
Solange die Maschine störungsfrei läuft, keine Unwuchten vorhanden sind, Verschleißteile nur unmerklich verschlissen sind und Lagerschäden nicht vorhanden sind, stimmt das gemessene Schwingungsmuster mit dem nach einem Teach-Modus erfassten Muster bzw. mit den gespeicherten Soll-Maschinendaten, die als Referenzdaten oder Modelldaten hinterlegt sind, überein.

Sobald sich z. B. in einem Lager der Maschine ein Schaden mit zunehmendem Ausmaß entwickelt, ändert sich das komplexe Schwingungsmuster. Noch bevor es zu einem Ausfall der Maschine kommt, kann mittels der zuvor genannten Analyse aus der Änderung im komplexen Schwingungsmuster dennoch eine gezielte Aussage für das zu überwachende Maschinenteil dahin getroffen werden, dass der sich ändernde Schwingungsanteil bzw. eine Amplitudenänderung bei einer spezifischen Frequenz, diesem Teil zuzuordnen ist. Ferner können durch gezielte Auswertung der Art, des Ausmaßes und der Geschwindigkeit des sich verändernden Schwingungsanteils im komplexen Schwingungsmuster Aussagen über den aktuellen und zukünftigen Zustand getroffen werden. Auf diese Weise kann die sich abzeichnende Maschinenstörung nicht nur vorzeitig detektiert, sondern die aufkommende oder sich abzeichnende Störung auch einem konkreten Maschinenteil oder einem Maschinenzustand zugeordnet werden.

In einer weiter vorteilhaften Ausgestaltung der Erfindung ist daher vorgesehen, dass zwischen zwei oder einer Vielzahl von zeitlich aufeinanderfolgenden Messungen die zeitliche Ableitung des Zeitsignals x(t) oder des Frequenzspektrums f(ω) dazu verwendet wird, um eine Prognose über den Zustand eines oder mehrerer der jeweiligen Maschinenteile (M1, ..., Mn) oder deren Betriebsverhalten vorzunehmen. Besonders von Vorteil ist es, wenn dabei das gemessene Schwingungssignal mittels einer Transformation, vorzugsweise einer Fourier-Transformation in ein Reihe, vorzugsweise eine Fourier-Reihe zerlegt wird.

In einer Weiterentwicklung des Erfindungsgedankens ist vorgesehen, dass bei der Bewertung der relativen Abweichung der Schwingungsgrößen für die einzelnen Betriebszustände wenige oder ein einziger Grenzwert vorgegeben wird, der je nach dem quantitativen Beitrag zur Schwingungsamplitude oder dem quantitativen Beitrag zur Amplitude der mittels Fourier-Analyse korrespondierenden Frequenz dem Grenzwert ein Gewichtungsparameter eingeprägt wird, ab dem eine erste Warnmeldung oder Informationsausgabe erfolgt.

Ein weiterer Aspekt der vorliegenden Erfindung betrifft eine Vorrichtung zur Durchführung eines wie zuvor beschriebenen Verfahrens zur schwingungsdiagnostischen Überwachung und Beurteilung von einzelnen Maschinenteilen (M1, ... Mn) einer Maschine mit einem an der Maschine anbringbarem Schwingungssensors zum diskontinuierlichen oder kontinuierlichen Messen und/oder Erfassen eines Zeitsignals x(t) der Schwingung der Maschine mit im laufenden Betrieb der Maschine sowie einem Schwingungsanalysator zur Analyse des Zeitsignals und einem Komparator zum Vergleich der aktuellen Messdaten oder davon abgeleitete Daten mit hinterlegten Sollwertdaten, Modelldaten und/oder Referenzdaten oder Korrelationsdaten.

Es ist vorteilhaft, wenn in der Vorrichtung ein Speicher vorgesehen ist, in dem Sollwertdaten, Modelldaten und/oder Referenzdaten abgelegt sind, welche der bestimmungsgemäßen Schwingungscharakteristik der Maschine und deren Maschinenteile (M1, ..., Mn) entsprechen. Ferner können zeitdiskrete oder zeitgestempelte Daten, insbesondere Korrelationsdaten erfasst und in dem Speicher abgelegt werden.

Die Vorrichtung kann in einer alternativen Ausgestaltung auch mit einem aktiven oder passiven Resonator ausgebildet sein, welcher lokal an unterschiedlichen Maschinenteilen der Maschine zur aktiven oder passiven Modifikation der Maschinenschwingung anbringbar ist. Dies ist insbesondere Vorteilhaft für Maschinen, die selbst ein schwaches Schwingungssignal aufweisen, indem die Maschine z. B. mit einem aktiven Resonator in Schwingung versetzt werden kann. Dabei kann der Resonator mit Vorteil Amplitudenbänder und/oder Frequenzbänder durchlaufen, um geeignete Schwingungsanregung zu erzielen.

Alternativ kann ein passiver Resonator verwendet werden, um diesen z. B. an einem Werkzeugaufnahmeteil anzubringen. Die aus dieser Schwingungsmodifikation gewinnbare Daten geben Aufschluss auf den lokalen Schwingungsbeitrag eines Maschinenteils zum Gesamtschwingungsmuster.

Aus den gewonnenen Daten oder den ermittelten Kurvenscharen der Schwingungsmodifikationen, lässt sich ein Modelldatensatz ableiten, der eine eindeutige Zuordnung von Schwingungsabweichungen im späteren Betrieb zu einzelnen Maschinenteilen erlaubt.

In einer weiteren vorteilhaften Ausgestaltung der Erfindung ist vorgesehen, dass die Hardwareimplementierung und die Softwareimplementierung zur Durchführung des beschriebenen Verfahrens in einer gemeinsamen Einheit zusammen mit dem Schwingungssensor oder integriert im Schwingungssensor vorgesehen ist.

Die Vorrichtung kann ferner in vorteilhafter Weise die folgenden Komponenten aufweisen:
- eine Datenverarbeitungseinheit (Basiseinheit) mit n Eingangsschnittstellen zum Anschluss von externen Sensoren und m Ausgangsschnittstellen zum Anschluss an eine Steuerung, Cloud oder eine Ausgabeeinheit und/oder
- ein vorzugsweise zeitgestempelter Speicher zur Datenintegration und/oder
- eine hardwareimplementierte Applikationssoftware zur Erfassung und Verarbeitung von Messdaten und zur Erstellung von Korrelationsdaten zwischen Soll- und Istzuständen und/oder
- weitere Sensoren zum Erfassen von Umgebungsbedingungen und Maschinenzuständen, wie z.B. der Umgebungstemperatur und der Temperatur der Maschine und/oder
- Statuskontrollelemente zur visuellen Erfassung von Statuszuständen, wie z.B. LED-Leuchten.
Die vorliegende Erfindung wird anhand der schwingungsdiagnostischen Überwachung einer motorbetriebenen Vorrichtung näher erläutert. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt.

Es zeigen dabei:
- Fig. 1: eine schematische Darstellung einer Maschine mit den Maschinenkomponenten und dem Schwingungssensor;
- Fig. 2: eine Darstellung einer Erfassungsphase in einem Blockschaltbild;
- Fig. 3: eine Darstellung der Überwachungsphase in einem Blockschaltbild;
- Fig. 4: eine komplexe Schwingungskurve mit der Zuordnung zu den Maschinenteilen;
- Fig. 5: eine Darstellung von Frequenzspektren zu unterschiedlichen Zeitpunkten t;
- Fig. 6: eine Temperaturkurve mit einem zulässigen Abweichungsband;
- Fig. 7: eine aus der Temperatur der Fig. 6 gewonnene Prognosekurve in Fortsetzung der aktuellen Messkurve;
- Fig. 8: eine aus der Prognosekurve der Fig. 7 gewonnene verbesserte Prognosekurve durch Berücksichtigung weitere Ist-Zustände, die in der Folgezeit in Vergleich zur Prognosekurve ermittelt wurden;
- Fig. 9: Darstellung einer zusammengesetzten Messkurve, die aus Kurvenbestandteilen pro Takt gewonnen wurde und
- Fig. 10: Messkurven eines Drehtisches mit zulässigen Abweichungsband;
- Fig. 11: eine Darstellung des Zusammenhangs von Parametern P, die zu einzelnen Peakwerten aus dem Frequenzspektrum gehören, welche durch Regressionskurven dargestellt sind und
- Fig. 12: eine schematische Darstellung einer diskontinuierlichen Bewegung um einen Winkel von 90°.

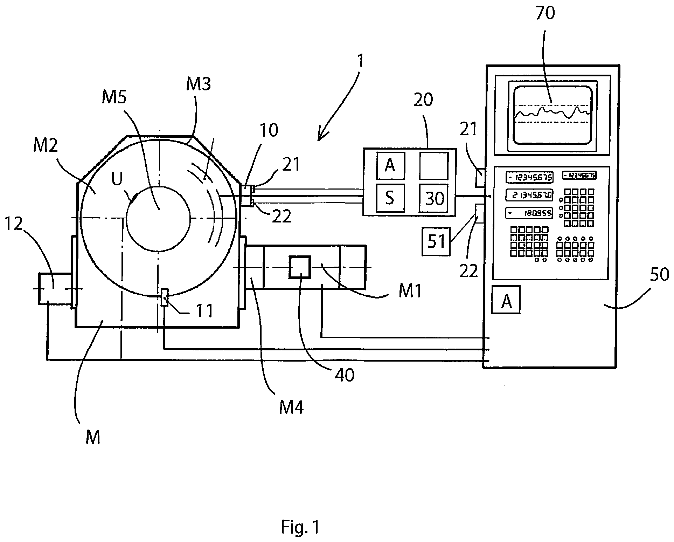

Im Folgenden wird die Erfindung mit Bezug auf die Figuren 1 bis 11 näher erläutert, wobei gleiche Bezugszeichen auf gleiche strukturelle und/oder funktionale Merkmale hinweisen.

In Fig. 1 ist schematisch eine schematische Darstellung einer Maschine M (hier ein Drehtisch) mit den Maschinenkomponenten M1, ..., M5 und einer Vorrichtung 1 mit einem Schwingungssensor 20 zur Schwingungsmessung dargestellt.

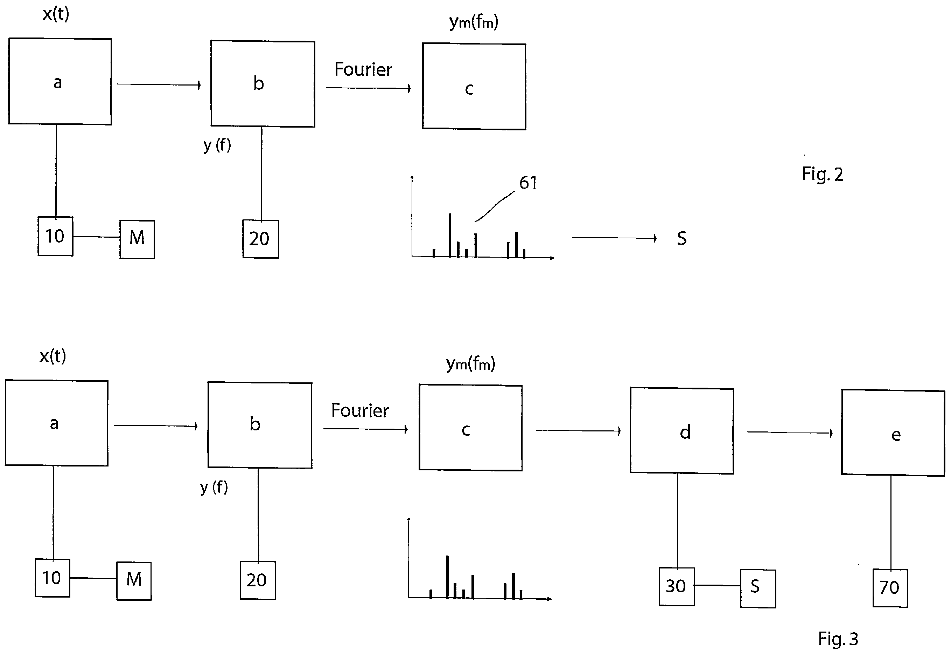

Die Vorrichtung 1 ist ausgebildet zur Durchführung des in den Figuren 2 und 3 mittels eines Blockschaltbildes dargestellten Verfahrens zur schwingungsdiagnostischen Überwachung und Beurteilung der einzelnen Maschinenteilen M1, ..., M5 einer Maschine M.

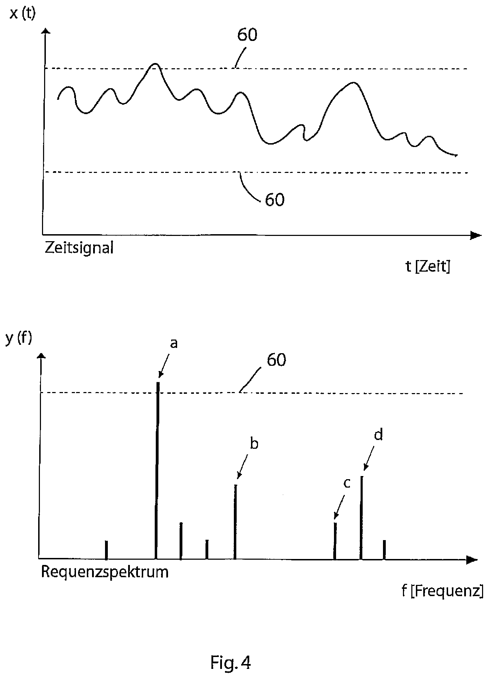

An der Maschine M ist ein Schwingungssensor 10 zum diskontinuierlichen oder kontinuierlichen Messen und/oder Erfassen eines Zeitsignals x(t), wie beispielhaft in der Figur 4 gezeigt, ausgebildet. Ferner können weitere nicht näher dargestellte Sensoren (wie z. B. ein Temperatursensor usw.) vorgesehen sein.

Die Schwingung der Maschine M wird mit dem Schwingungssensor 10 in dieser Ausführungsform im laufenden Betrieb der Maschine M erfasst.

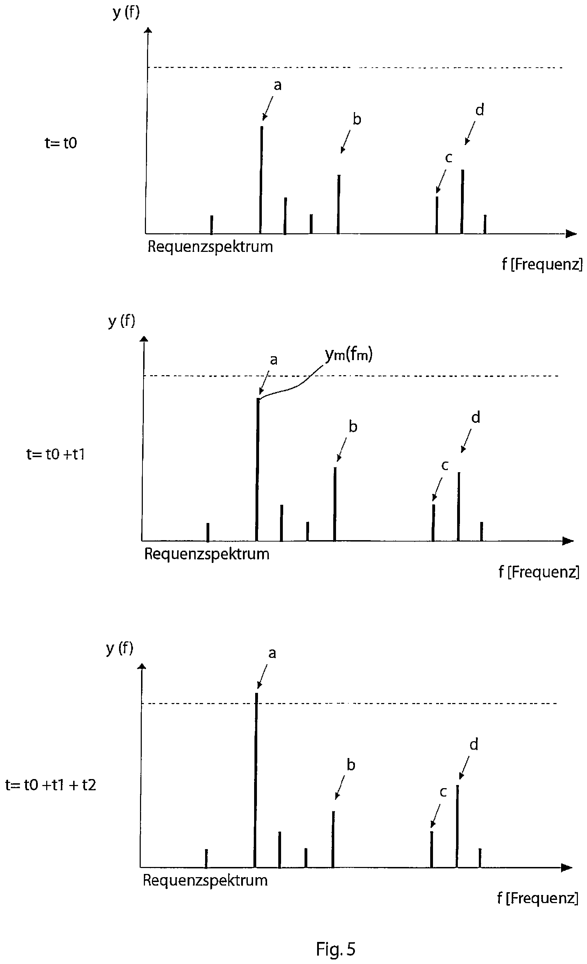

Ferner ist ein Schwingungsanalysator 20 zur Analyse des Zeitsignals vorgesehen. Dieser beinhaltet eine hardwareimplementierte Applikation, die alternativ auch im Sensor 10 oder der Datenverarbeitungseinrichtung 50 untergebracht sein kann. Ferner ist ein Komparator 30 vorgesehen, zum Vergleich der aktuellen Messdaten, wie in der Figur 4 dargestellt oder davon abgeleitete Daten (hier das Frequenzspektrum, wie in der unteren Ansicht der Figur 4 und der Fig. 5 gezeigt) mit hinterlegten Sollwertdaten 60, Modelldaten 61 und/oder Referenzdaten 61. Besonders vorteilhaft ist eine Ausgestaltung bei der die Sollwertdaten als kompletter Zustandsraum (vorzugsweise als Satz von Matrizen) in einem Sollwertspeicher abgelegt sind.

Der Speicher S dient dem Abspeichern und Abrufen der Sollwertdaten 60, Modelldaten 61 und/oder Referenzdaten 61 von einem Komparator. Mit Vorteil ist der Komparator so ausgebildet, dass er nicht lediglich einzelne Sensordaten mit hinterlegten Sollwertdaten vergleichen kann, sondern eine Mehrzahl an Daten z.B. von mehreren Sensoren in Abhängigkeit der jeweiligen Betriebs- und Umgebungsbedingung, so dass dieser Datensatz mit einem hinterlegten Datensatz verglichen werden kann, so dass eine ganze Reihe von Daten, insbesondere maschinenteilbezogenen Daten mit den Modelldaten verglichen werden können. Die Modelldaten entsprechen, wie z. B. in der oberen Ansicht der Figur 5 der bestimmungsgemäßen Schwingungscharakteristik der Maschine 10 und deren Maschinenteile M1, ..., M5 im ungestörten Normalbetrieb in einem bestimmten Betriebszustand.

Ferner sind vorzugsweise auch die folgenden Komponenten in den exemplarischen Ausführungsbeispielen, insbesondere im Ausführungsbeispiel der Figur 1 vorgesehen:
- eine Datenverarbeitungseinheit 50;
- Eingangsschnittstellen 21 zum Anschluss von externen Sensoren und Ausgangsschnittstellen 22 zum Anschluss an eine Steuerung 51, Cloud oder eine Ausgabeeinheit und
- ein vorzugsweise zeitgestempelter Speicher S zur Datenintegration und zum Auslesen von Sollwertdaten,
- eine hardwareimplementierte Applikationssoftware A zur Erfassung und Verarbeitung von Messdaten und zur Erstellung von Korrelationsdaten zwischen Soll- und Istzuständen,
- eine Visualisierungsebene 60,
- ein Referenzschalter 11 und ein Messsystem 12 für den Rundtisch,
- ein Prognosemodul, welches aus den Ist-Daten mittels eines Extrapolationsverfahrens Prognosedaten für zukünftige Zeitpunkte t ermitteln kann.

Wie in der Figur 5 zu erkennen ist, zeigt die obere Abbildung ein Frequenzspektrum mit Spektrallinien 61 zu diskreten Frequenzen, wobei die Spektrallinie a von dem Lager M3 herrührt, während die Spektrallinie b eine Unwucht U charakterisiert, die Spektrallinie c von dem Motor M1 und die Spektrallinie d von dem Teller M2 des Drehtisches 10 und die Spektrallinie e von dem Getriebe M4 herrührt. Die Messung erfolgt zu einem Startzeitpunkt t=t0.

Dieser Zustand soll den Normalbetrieb darstellen, bei dem die Amplituden der einzelnen Spektrallinien im Frequenzband unterhalb eines jeweils definierten Sollwertes liegen, dargestellt durch z. B. die gestrichelte Sollwertkurve 60 für die Spektrallinie a. Grundsätzlich können für alle Maschinenteile M1, ..., M5 und den zugeordneten Spektrallinien jeweils individuelle Sollwertkurven 60 definiert werden. Abweichungen auf Grund von verändertem Betriebsverhalten können durch Verschiebung von Spektrallinien oder durch Veränderung der Amplitude detektiert werden.

Figur 2 ist ein Blockdiagramm einer Erfassungsphase zur Ermittlung der Schwingungsanteile der Maschinenteile M1, ..., M5 im ungestörten Normalbetrieb. Im Schritt a) erfolgt eine Messung und damit Erfassung eines Schwingungssignals und zwar eines Zeitsignals x(t) der Schwingung der Maschine M mit einem Schwingungssensor 10. Zusätzlich kann auch der gesamte Zustandsraum für unterschiedliche oder konkrete Umgebungsbedingungen U1,..., Un erfasst werden und die ermittelten Datensätze in Matrizen abgespeichert werden, so dass abhängig von den Umgebungsbedingungen die jeweils passende Datenmatrix als Referenz-Sollwertmatrix herangezogen werden kann.

Im Schritt b) erfolgt eine Auswertung des Zeitsignals x(t) bzw. der Sensordaten der erfassten Sensorwerten. Das Zeitsignals x(t) wird mittels eine Frequenzanalyse durch einen Frequenzanalysator 20 analysiert, wobei der Analysator 20 ein Frequenzspektrums y(f) mit diskreten Frequenzmaxima yₘ(fₘ) ermittelt, wobei die Frequenzmaxima jeweils einem bestimmten Maschinenteil M1, ... M5 zugeordnet werden (Schritt c).

Die ermittelten Daten werden in Schritt d) im Speicher S abgelegt. Dieses Messergebnis entspricht der oberen Abbildung der Fig. 5 zu dem Zeitpunkt t=t0 für das Zeitsignal.

Für den Fall, dass ein Zustandsraum für eine Anzahl von Sensoren zur Erfassung unterschiedlicher Maschinenteile und Maschinenparameter erfasst und ermittelt wird, würde sich ein mehrdimensionaler Zustandsraum mit Zustandswerten für den bestimmungsgemäßen Betrieb ergeben, sowie Raumbereiche, in denen Messwerte eine unzulässige Veränderung vom Betriebsverhalten eines bestimmten Maschinenteils oder eines bestimmten Parameters repräsentieren.

Während des Betriebes der Maschine M wird, wie im Blockschaltbild der Fig. 3 verfahren. Es erfolgen die zuvor beschriebenen Schritte a), b) und c) zeitdiskret oder kontinuierlich (z.B. mit einem Zeitstempel) sowie der Schritt d), d.h. der Vergleich des extrahierten Frequenzspektrums y(f) mittels eines Komparators 30 mit den hinterlegten Sollwertdaten 60 oder den Modelldaten 61.

In einem weiteren Schritt e) erfolgt die Aufbereitung bzw. Bereitstellung einer Zustandsinformation und ggf. einer Warnmeldung für die jeweiligen Maschinenteile M1, ..., M5, sobald eine Abweichung der aktuell gemessenen Schwingungsdaten von Sollwertdaten 60 oder Modelldaten 61 festgestellt wurde. Bevorzugt erfolgt ferner eine Extrapolation der Messwerte in die Zukunft mit herkömmlichen Extrapolationsverfahren, wobei erfindungsgemäß die Extrapolationskurve durch zeitversetzte dynamische Korrekturen der Extrapolationskurve infolge des Vergleichs zwischen Ist-Daten und extrapolierten Daten regelmäßig angepasst wird. Hierzu können die Parameter der zugrunde gelegten Extrapolationskurve bzw. die Kurve als solche dem tatsächlichen Verhalten angepasst werden. Hierdurch werden die Sollwert-Matrizen bzw. Sollwertdaten auch für zukünftige Prognosen immer besser, da die so ermittelten Extrapolationskurven immer besser das tatsächliche und das prognostizierte Verhalten einer Maschine unter bestimmten Umgebungsbedingungen abbildet.

In der mittleren und unteren Ansicht der Figur 5 sind beispielhafte (kumulierte) Abweichungen der ungestörten Schwingung im Vergleich zur oberen Ansicht der Figur 5 gezeigt. Wie zu erkennen ist, hat zum Zeitpunkt t= t0+t1 nach der Betriebszeit t1 die Amplitude der Spektrallinie a merklich zugenommen, liegt aber noch unterhalb eines maximalen Sollwertes 60, welcher durch die gestrichelte Sollwertlinie dargestellt ist. Die untere Sollwertlinie 60 stellt einen ersten Grenzwert dar, bei dem ein Überschreiten als Abweichung detektiert wird, die solange zulässig ist, bis eine Abweichung über die zweite obere Sollwertlinie 60 hinausgeht. Bei Überschreiten der oberen Grenzwerte liegt ein unzulässiger Betriebszustand vor. Das Band zwischen den beiden Sollwertlinien 60, ist ein Band, welches zulässige Abweichungen von einer theoretisch exakten Kurve definiert.

In der unteren Ansicht der Figur 5 ist die Amplitude zum Zeitpunkt t = t0+t1+t3 nach der Betriebszeit t1+t2 der Spektrallinie a noch weiter erhöht und liegt nun oberhalb des zweiten (maximal zulässigen) Sollwertes 60. Die Spektrallinie a gehört zum Lager M3 und deutet auf einen zunehmenden Lagerschaden hin. Aus dem zeitlichen Differential der Amplitudenmaxima der Spektrallinien a lässt sich eine Prognosezeit definieren, zu dem erwartungsgemäß das Lager ausgetauscht werden muss.

Besonders bevorzugt ist es, wenn die Datenverarbeitungsanlage 50 über eine Schnittstelle mit einem Warenwirtschaftssystem verbunden ist und automatisch einen Bedarf eines Austauschteils an dieses meldet und den Lagerbestand vorhandener Teile damit abstimmt und ggf. einen Beschaffungsauftrag zur Beschaffung dieses Austauschteils z.B. eines bestimmten Lagers auslöst.

Die Spektrallinie b wächst ebenfalls mit zunehmender Betriebszeit an, was auf eine zunehmende Unwucht U an der Masse M4 des Drehtellers zurückzuführen ist.

In der gezeigten Ausführung der Figur 1 ist ferner ein aktiver Resonator 40 vorgesehen, welcher lokal an unterschiedlichen Maschinenteilen der Maschine M zur aktiven Modifikation der Maschinenschwingung dieses Maschinenteils anbringbar ist.

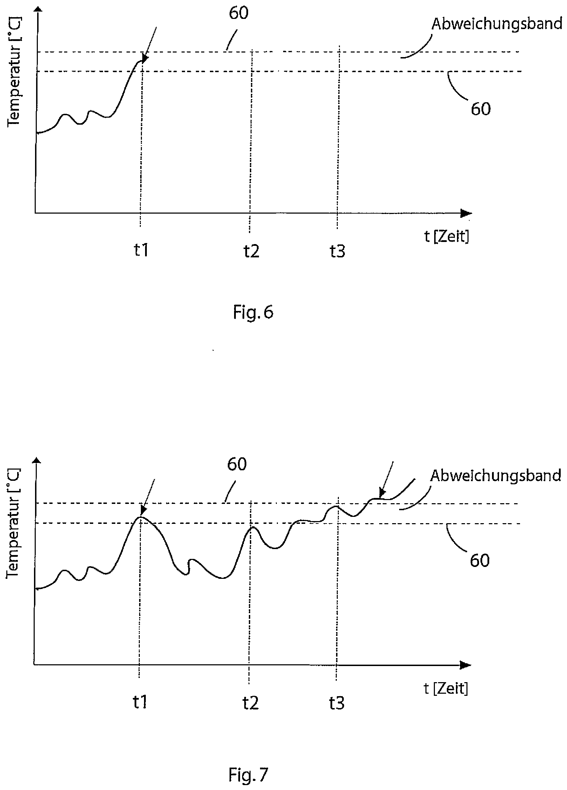

In der Fig. 6 ist eine beispielhafte Temperaturkurve (T in °C) gegen die Zeit t aufgetragen, welche von einem Temperatursensor einer Vorrichtung erfasst wurde sowie ein zulässiges Abweichungsband (zwischen den gestrichelten Sollwertlinien 60) für noch zulässige Temperaturen gezeigt. Zum Zeitpunkt t₁ steigt die Temperatur T auf einen Wert an, welcher zwar im Abweichungsband liegt. Nach einer Zuordnung der Abweichung erkennt der Analysator, dass die Temperaturerhöhung durch ein bestimmtes Maschinenteil z.B. ein Lager hinweist. Da die gemessene Temperatur T das zulässige Band nicht verlassen hat, würde mit einer herkömmlichen Methode lediglich der Temperaturüberwachung jedoch keinerlei Aussage über das betroffene Maschinenteil und auch keine Aussage für die Zukunft getroffen werden können. Mit der erfindungsgemäßen Methode wird eine Prognosekurve aus den bisher gewonnenen Daten (wie in der Fig. 7 beispielhaft gezeigt) gewonnen, die den Kurvenverlauf für zukünftige Zeiten auf Basis einer Extrapolation vorhersagt. Hierbei ist davon auszugehen, dass zum Zeitpunkt t3 das Lager versagen wird und die Temperatur dann deutlich ansteigt.

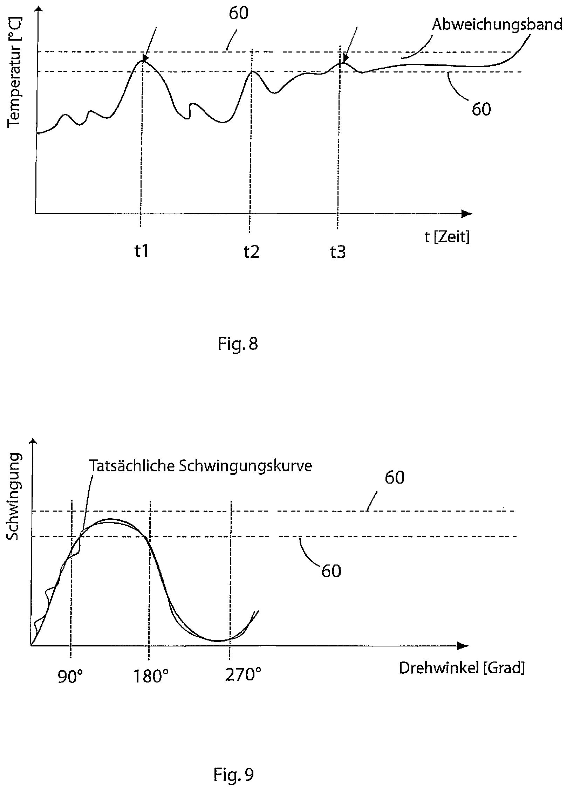

Die Figur 8 zeigt eine aus der Prognosekurve der Figur 7 gewonnene verbesserte Prognosekurve durch Berücksichtigung weiterer Ist-Zustände zu einem Zeitpunkt t2, t3,..., tn, die in der Folgezeit zur Kurve aus der Figur 6 gewonnen wurden durch den Vergleich der jeweiligen Prognosekurve zum tatsächlichen Verlauf. Zu erkennen ist, dass die Kurve erst zu einem späteren Zeitpunkt als zum ursprünglich prognostizierten Zeitpunkt t3 aus dem Abweichungsband herausläuft. Insofern ist ersichtlich, dass zum Zeitpunkt t1, bei dem erstmals ein signifikanter Temperaturanstieg detektiert wurde, der Lagerschaden erst begonnen hat und noch nicht fortgeschritten war. Auf Grundlage dieser Erkenntnisse kann die Reparatur und Wartung wesentlich besser geplant werden und die Lagerstandzeit optimiert werden, da das Lager auf Grund der gewonnenen Daten nicht zu früh getauscht würde.

Die Figur 9 zeigt eine Darstellung einer zusammengesetzten Messkurve, die aus Kurvenbestandteilen pro Takt eines Drehtellers gewonnen wurde. Da für jeden Takt eine Beschleunigungsphase mit einer Abbremsphase erfolgt, ist es möglich, aus den einzelnen Bewegungspfaden eine zusammengesetzte Kurve zu ermitteln. Ferner wird, wie bei den zuvor beschriebenen Ausführungsbeispielen wieder aus den Sollwertdaten im Zustandsraum der zulässigen Datensätze ein Abweichungsband für jeden Parameter berechnet oder festgelegt. Solange die Kurve, die die Beschleunigungsphasen und Bremsphasen repräsentiert, innerhalb der Werte der Zustandsmatrix liegt, welche ein Abweichungsband für diesen Parameter umfassen, wird der Zustand als "zulässiger Betriebszustand" erkannt. Aus den Vergangenheitswerten und den jeweils aktuellen Messwerten innerhalb des Abweichungsbandes lässt sich (wie oben erläutert) eine Prognosekurve extrapolieren, die Aufschluss darüber gibt, wie sich die Bewegungskurve in der Zukunft entwickeln wird.

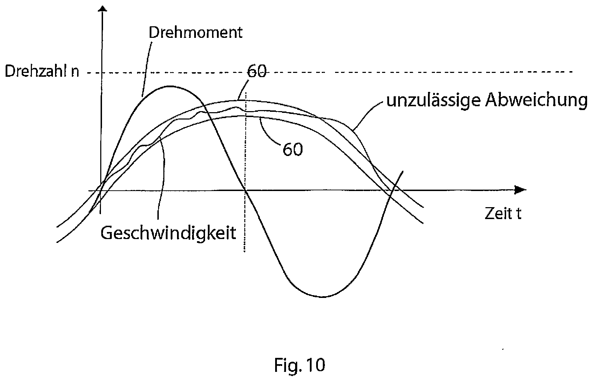

Die Figur 10 zeigt den Kurvenverlauf der Bewegung eines Drehtisches von der Beschleunigungsphase I, bis zum Plateau II, bei dem die Geschwindigkeit maximal wird und dann in der Abbremsphase III die Geschwindigkeit wieder bis auf "Null", d.h. bis zum Stillstand des Rundschalttisches abnimmt.

In der Grafik ist auch die zeitliche Ableitung und demnach eine zum Drehmoment M proportionale Kurve dargestellt, welche zunächst ansteigt bis zu einem Maximalwert, dann bis auf "Null" abnimmt und dann negativ wird.

Um die idealisierte Drehmomentkurve ist ein Abweichungsband eingezeichnet. Da das Drehmoment über das Massenträgheitsmoment mit der Winkelbeschleunigung verknüpft ist, lassen sich für die einzelnen Massenträgheitsmomente, die bei einem Drehtisch bei der Bearbeitung wirksam werden, entsprechende Sollkurven ermitteln und diese Sollkurven mit den aufgenommenen Geschwindigkeitskurven vergleichen. Die Geschwindigkeitskurve bzw. die Beschleunigung gibt dann unmittelbar Aufschluss über das Drehmoment.

Liegt die Geschwindigkeit z. B. außerhalb des zulässigen Bandes in einer bestimmten Winkellage, zum Beispiel in der Abbremsphase III, so lassen sich aus den Abweichungen Rückschlüsse auf einen Fehler an einem bestimmten Maschinenteil ziehen, sofern der Zustandsraum für die einzelnen Komponenten erfasst ist. Durch direkten Vergleich der Abweichungsparameter mit den Soll-Parametern kann aus dem Matrixelement eine Beurteilung für das "nicht bestimmungsgemäß" funktionierende Maschinenteil und dessen Prognoseverhalten (insbesondere in Zusammenschau mit dem erläuterten Extrapolationsverfahren) getroffen werden.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

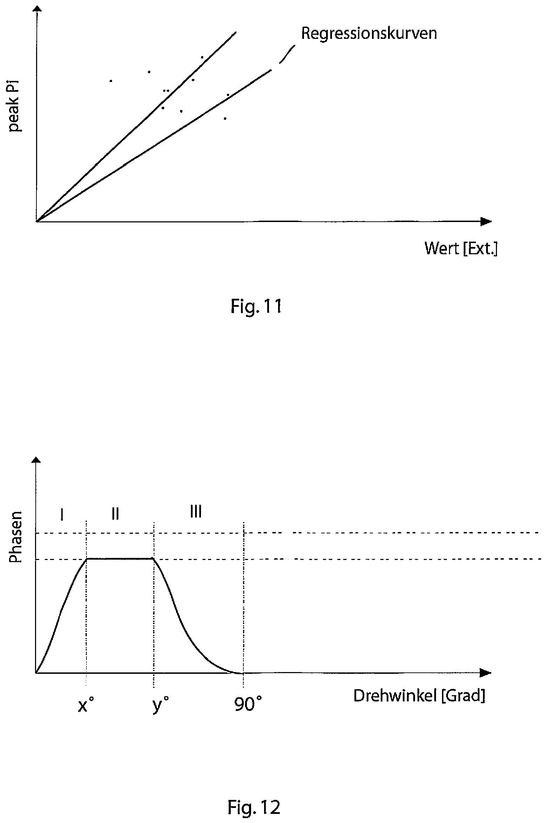

So ist in der Fig. 11 eine Darstellung des Zusammenhangs von Parametern P, die zu einzelnen Peakwerten aus dem Frequenzspektrum gehören, gezeigt, welche durch Degressionskurven dargestellt sind. Eine Analysemöglichkeit und Prognose liegt in der Verwendung von Referenzmodellen. Dies ist in Fig. 12 anhand einer Unwucht (Exzentrizität) näher erläutert. Hierzu werden für den Anwendungsfall rotationswinkelabhängiger oder für getaktete diskontinuierliche Bewegungen ein entsprechendes Referenzmodell entworfen. Das Referenzmodell mit den Schwingungs-Peaks (Pi) einer Frequenzkurve wird für jeden Peak P in eine Funktion der Form f(P1) = α P1 + ß gefasst, um diese mittels den Methoden der Regressionsanalyse zu analysieren. Werden die Abweichungen (Peaks Pi) zu groß von der Regressionsmodellkurve, so kann daraus eine Prognose auf den dem Peak korrespondierenden Maschinenteil gezogen werden.

In der Fig. 12 ist eine schematische Darstellung einer diskontinuierlichen Bewegung eines Drehtisches um einen Winkel von 90° in drei Bewegungsphasen gezeigt, nämlich der Phase I (Beschleunigungsphase), Phase II (Konstantphase) und Phase III (Abbremsphase bis zum Stillstand).

## Patentansprüche

1. Verfahren zur sensordiagnostischen Überwachung und Beurteilung von einzelnen Maschinenteilen (M1, ... Mn) einer sich diskontinuierlich drehenden oder in einem Takt getakteten Bewegung einer Maschine (M) und deren aktueller und prognostizierter Zustand unter Verwendung wenigstens eines Schwingungssensors (10) und vorzugsweise von weiteren Sensoren (S) mit den folgenden Schritten:
a) Erfassen wenigstens eines Zeitsignals x(t) der Schwingung der Maschine (M) mit dem Schwingungssensor (10) bei einer Bewegungsphase einer diskontinuierlichen Drehbewegung oder bei einem Takt dieser Maschine (M);
b) Auswerten des oder der Sensorsignale
c) indem das wenigstens eine Zeitsignal x(t) mittels einer Frequenzanalyse durch einen Frequenzanalysator (20) ausgewertet wird und dabei;
d) ein Frequenzspektrum y(f) mit diskreten Frequenzmaxima ym(fm) extrahiert wird, wobei die Frequenzmaxima ym(fm) jeweils einem bestimmten Maschinenteil (M1, ... Mn) zugeordnet sind oder werden;
e) Vergleich des Frequenzspektrums y(f) mit den diskreten Frequenzmaxima ym(fm) mit Sollwertdaten, Modelldaten und/oder Referenzdaten einzelner Maschinenteile (M1, ... Mn);
f) Bereitstellung einer Beurteilungsinformation und/oder einer Warnmeldung für die jeweiligen Maschinenteile (M1, ... Mn), sobald eine Abweichung der extrahierten Frequenzmaxima ym(fm), ermittelt aus den aktuell gemessenen Schwingungsdaten, von den Sollwertdaten, den Modelldaten und/oder den Referenzdaten einzelner Maschinenteile (M1, ... Mn) ermittelt wurde wobei die Bewegungsphase oder der Takt der Maschine, bei dem das wenigstens eine Zeitsignal erfasst wird, in wenigstens drei Bewegungsteilphasen aufgeteilt wird, welche eine Beschleunigungsphase oder Konstantphase darstellen und wenigstens die jeweiligen Berechnungen in den Schritten c) und d) jeweils getrennt für die jeweils relevanten Zeiträume der Bewegungsteilphasen erfolgen.

2. Verfahren nach Anspruch 1, wobei
eine Mehrzahl an Sensoren (S) zur sensordiagnostischen Überwachung und Beurteilung verschiedener Maschinenparameter bei dem Verfahren verwendet werden und die Sensordaten (S1, ...; Sn)(t) als Datenmatrix Mᵢⱼ (t) bestehend aus Messdaten mit den Sollwerten einer Sollwertmatrix Msollᵢⱼ verglichen werden, wobei t die Zeit darstellt und sobald zu einem Zeitpunkt t eine Abweichung festgestellt wird, die Abweichung betragsmäßig erfasst wird und die Sensordaten (S1, ...; Sn) (t) einer zeitlich nachfolgenden Messung wiederum mit den Sollwertdaten der Sollwertmatrix Msollᵢⱼ und mit zeitlich zuvor gemessenen Sensordaten verglichen werden wobei im Falle einer betragsmäßig zunehmenden Abweichung einer der Sensordaten (S1, ...; Sn)(t) mittels einer Extrapolation aus den gemessenen Daten ein Kurvenverlauf extrapoliert wird, aus dem sich ein Zeitpunkt ableiten lässt, zu dem die Sensordaten (S1, ...; Sn)(t) eine zulässige Abweichung überschreiten oder einen zulässigen Toleranzbereich verlassen werden.

3. Verfahren nach Anspruch 1 oder 2, wobei
die Sensordaten des Schwingungssensors (10) erfasst werden und mit den hinterlegten Sollwertdaten verglichen werden und sobald zu einem Zeitpunkt t eine Abweichung festgestellt wird, die Abweichung betragsmäßig erfasst wird und die Sensordaten einer zeitlich nachfolgenden Messung wiederum mit den Sollwertdaten und mit zeitlich zuvor gemessenen Sensordaten des Schwingungssensors (10) verglichen werden wobei im Falle einer betragsmäßig zunehmenden Abweichung der ermittelten Sensordaten mittels einer Extrapolation aus den gemessenen Daten ein Kurvenverlauf extrapoliert wird, aus dem sich ein Zeitpunkt ableiten lässt, zu dem die Sensordaten eine zulässige Abweichung betragsmäßig überschreiten oder einen zulässigen Toleranzbereich verlassen werden.

4. Verfahren nach einem der Ansprüche 2 oder 3, wobei mittels diskontinuierlichem oder kontinuierlichem Messen und Erfassen eines Schwingungssignals mittels des Schwingungssensors (10) und/oder von Sensordaten (S1, ...; Sn) (t) eines oder aller Sensoren (S) der Verlauf der extrapolierten Kurve oder die extrapolierten Werte aus einer vorhergehenden Extrapolation für einen oder alle Sensordaten zu denen Abweichungswerte ermittelt wurden mit den aktuell ermittelten Daten verglichen wird und bei Differenzen zwischen den Ist-Daten und den extrapolierten Daten entsprechend den Ist- Daten eine zu den Ist-Daten angepasste Extrapolationskurve und insbesondere angepasste Parameter der theoretischen Extrapolationskurve berechnet werden und abhängig davon die Parameter zur Berechnung der Extrapolationsfunktion angepasst werden, um so zu einer verbesserten Prognosequalität zu gelangen indem eine neue Extrapolation der zukünftigen Sensordaten mit der neu berechneten Extrapolationsfunktion vorgenommen wird.

5. Verfahren nach einem der vorgehenden Ansprüche, wobei das Verfahren im laufenden Betrieb der Maschine (10) während einem Bewegungstakt oder einer diskontinuierlichen Bewegung in einem bestimmten Betriebsmodus erfolgt.

6. Verfahren nach einem der vorgehenden Ansprüche, wobei das zeitliche Differential oder die erste Ableitung nach der Zeit des bei der Messung ermittelten Schwingungssignals oder einer davon abgeleiteten Messgröße dazu verwendet wird, eine Prognose über den zukünftigen Zustand eines oder mehrerer der jeweiligen Maschinenteile (M1, ... Mn) oder deren Betriebsverhalten, vorzugsweise zu einer bestimmten Zeit vorzunehmen.

7. Verfahren nach einem der vorgehenden Ansprüche, wobei zwischen zwei oder einer Vielzahl von zeitlich aufeinanderfolgenden Messungen die zeitliche Ableitung des Zeitsignals x(t) oder des Frequenzspektrums y(f) dazu verwendet wird, um eine Prognose über den aktuellen und/ oder zukünftigen Zustand eines oder mehrerer der jeweiligen Maschinenteile (M1, ..., Mn) oder deren Betriebsverhalten vorzunehmen.

8. Verfahren nach einem der vorhergehenden Ansprüche, wobei das gemessene Schwingungssignal mittels einer Transformation, vorzugsweise einer Fourier-Transformation in eine Reihe, vorzugsweise eine Fourier-Reihe zerlegt wird.

9. Verfahren nach einem der vorhergehenden Ansprüche, wobei für wenigstens einen Betriebsmodus der Maschine zunächst über einen definierten Zeitraum das Schwingungsverhalten der Maschine (M) und deren Maschinenteile (M1, ..., Mn) erfasst und daraus mittels einer Analyse mit einem Analysator (40), vorzugsweise mittels einer softwareimplementierten Berechnung in Form einer Reihenentwicklung Sollwertdaten und/oder Modelldaten für einzelne Maschinenteile (M1, ..., Mn) extrahiert und vorzugsweise in einem Speicher (S) für einen bestimmten Maschinenzustand gespeichert werden.

10. Verfahren nach einem der vorhergehenden Ansprüche, wobei ferner ein aktiver oder passiver Resonator (40) vorgesehen ist, welcher lokal an unterschiedlichen Maschinenteilen (M1, ..., Mn) der Maschine (M) anbringbar ist, zur aktiven oder passiven Modifikation der Maschinenschwingung, um aus der Modifikation des Schwingungssignal in seinem Amplitudenanteil oder Frequenzanteil oder einer davon abgeleiteten Berechnungsgröße die Zuordnung zu einem bestimmten Maschinenteil (M1, ..., Mn) zu ermöglichen.

## Claims

1. Method for sensor-diagnostic monitoring and assessment of individual machine parts (M1, ... Mn) of a discontinuous rotating or clocked in a clock movement of a machine (M) and their current and forecast condition, using at least one vibration sensor (10), and preferably using additional sensors (S); the method comprising the following steps:
a) capturing at least one time signal x(t) of the vibration of the machine (M) with the vibration sensor (10) during a movement phase of an discontinuous rotating movement or during a clock of this machine (M);
b) evaluating the sensor signal or signals;
c) by evaluating the at least one time signal x(t) by means of a frequency analysis, using a frequency analyzer (20) and thereby;
d) extracting a frequency spectrum y(f) with discrete frequency maxima ym(fm), wherein the respective frequency maxima ym(fm) are or will be respectively assigned to a specific machine part (M1, ...Mn);
e) comparing the frequency spectrum y(f) with the discrete frequency maxima ym(fm) with target value data, model data and/or reference data of individual machine parts (M1, ... Mn);
f) providing an evaluation information and/or an alert message for the respective machine parts (M1, ... Mn) as soon as a deviation of the extracted frequency maxima ym(fm), determined from the currently measured vibration data, from the target value data, the model data and/or the reference data of individual machine parts (M1, ... Mn) has been determined, wherein the movement phase or the clock of the machine, in which the at least one time signal is captured, is divided into at least three movement sub-phases, which represent an acceleration phase or constant phase, and at least the respective calculations in the steps c) and d) are respectively carried out separately for the respective relevant periods of the movement sub-phases.

2. Method according to claim 1, wherein
a plurality of sensors (S) are used for sensor-diagnostic monitoring and assessment of various machine parameters in the method, and the sensor data (S1, ...; Sn)(t) are compared as a data matrix Mᵢⱼ (t) consisting of measurement data with the target values of a target value matrix Msollᵢⱼ, wherein t represents the time and as soon as a deviation is detected at a time t, the deviation is captured in terms of amount and the sensor data (S1, ...; Sn)(t) of a chronologically successive measurement are in turn compared with the target value data of the target value matrix Msollᵢⱼ and with sensor data measured chronologically previously, wherein in the event of an increasing deviation in terms of amount of one of the sensor data (S1, ...; Sn)(t) a curve progression is extrapolated from the measured data by means of an extrapolation, from which curve progression a time can be derived at which the sensor data (S1, ...; Sn)(t) exceed a permissible deviation or leave a permissible tolerance range.

3. Method according to claim 1 or 2, wherein
the sensor data of the vibration sensor (10) are captured and compared with the stored target value data, and as soon as a deviation is detected at a time t, the deviation is captured in terms of amount and the sensor data of a chronologically successive measurement are in turn compared with the target value data and with sensor data of the vibration sensor (10) measured chronologically previously, wherein, in the event of an increasing deviation in terms of amount of the determined sensor data, a curve progression is extrapolated from the measured data by means of an extrapolation, from which a time can be derived at which the sensor data exceed the amount of a permissible deviation or leave a permissible tolerance range.

4. Method according to one of the claims 2 or 3, wherein by means of discontinuous or continuous measurement and capturing of an vibration signal by means of the vibration sensor (10) and/or of sensor data (S1, ..; Sn) (t) of one or all sensors (S), the progression of the extrapolated curve or the extrapolated values from a previous extrapolation for one or all sensor data for which deviation values were determined is compared with the currently determined data, and in the event of differences between the actual data and the extrapolated data, an extrapolation curve adapted to the actual data and in particular adapted parameters of the theoretical extrapolation curve are calculated in accordance with the actual data, and the parameters for calculating the extrapolation function are adapted in dependence thereon, in order to achieve an improved forecast quality by a new extrapolation of the future sensor data with the newly calculated extrapolation function.

5. Method according to one of the preceding claims, wherein the method is carried out during operation of the machine (10) during a movement clock or a discontinuous movement in a predetermined operating mode.

6. Method according to one of the preceding claims, wherein
the time differential or the first derivative of the time of the vibration signal determined during the measurement or a measured value derived therefrom is used to make a prognosis about the future state of one or more of the respective machine parts (M1, ... Mn) or their operating behaviour, preferably at a specific time.

7. Method according to one of the preceding claims, wherein
between two or a plurality of chronological successive measurements, the time derivative of the time signal x(t) or of the frequency spectrum y(f) is used to make a prognosis about the current and/or future state of one or more of the respective machine parts (M1, ..., Mn) or their operating behaviour.

8. Method according to one of the preceding claims, wherein
the measured vibration signal is decomposed by means of a transformation, preferably a Fourier transformation, into a series, preferably a Fourier series.

9. Method according to one of the preceding claims, wherein for at least one operating mode of the machine, the vibration behaviour of the machine (M) and its machine parts (M1, ..., Mn) is initially captured over a defined period of time and therefrom by means of an analysis with an analyser (40), preferably by means of a software-implemented calculation in the form of a series development, target value data and/or model data for individual machine parts (M1, ..., Mn) are extracted and preferably stored in a memory (S) for a specific machine state.

10. Method according to one of the preceding claims, wherein furthermore an active or passive resonator (40) is provided, which is locally attachable to different machine parts (M1, ..., Mn) of the machine (M), for active or passive modification of the machine vibration, in order to enable the assignment to a specific machine part (M1, ..., Mn) from the modification of the vibration signal in its amplitude portion or frequency portion or a calculation value derived therefrom.

## Revendications

1. Procédé de surveillance de diagnostic par capteur et d'évaluation de parties de machine (M1, ... Mn) individuelles d'un mouvement rotatif de manière discontinue ou cadencé selon une cadence d'une machine (M) de son état actuel et pronostiqué en utilisant au moins un capteur d'oscillations (10) et de préférence d'autres capteurs (S) avec le étapes suivantes :
a) détection d'au moins un signal de temps x(t) de l'oscillation de la machine (M) avec le capteur d'oscillations (10) lors d'une phase de mouvement d'un mouvement rotatif discontinu ou lors d'une cadence de cette machine (M) ;
b) exploitation du ou des signaux de capteur
c) par le fait que l'au moins un signal de temps x(t) soit exploité au moyen d'une analyse de fréquences par un analyseur de fréquences (20) et ce faisant ;
d) un spectre de fréquences y(f) avec des maximums de fréquence ym(fm) discrets est extrait, dans lequel les maximums de fréquence ym(fm) sont ou seront affectés respectivement à une partie de machine (M1, ... Mn) déterminée ;
e) comparaison du spectre de fréquences y(f) avec les maximums de fréquence ym(fm) discrets avec des données de valeur de consigne, des données de modèle et/ou des données de référence de parties de machine (M1, ... Mn) individuelles ;
f) mise à disposition d'une information d'évaluation et/ou d'un message d'avertissement pour les parties de machine (M1, ... Mn) respectives, dès qu'un écart des maximums de fréquence ym(fm) extraits est déterminé à partir des données d'oscillation actuellement mesurées des données de valeur de consigne, des données de modèle et/ou des données de référence de parties de machine (M1, ... Mn) individuelles a été déterminé dans lequel la phase de mouvement ou la cadence de la machine, pour laquelle l'au moins un signal de temps est détecté, est divisée en au moins trois phases de partie de mouvement, lesquelles représentent une phase d'accélération ou phase constante et au moins les calculs respectifs dans les étapes c) et d) ont lieu respectivement séparément pour les périodes de temps respectivement pertinentes des phases de partie de mouvement.

2. Procédé selon la revendication 1, dans lequel
une pluralité de capteurs (S) de surveillance de diagnostic par capteur et d'évaluation de différents paramètres de machine sont utilisés pour le procédé et les données de capteur (S1, ... ; Sn)(t) sont comparées en tant que matrice de données Mij(t) composée de données de mesure avec les valeurs de consigne d'une matrice de valeurs de consigne Msollᵢⱼ, dans lequel t représente le temps et dès qu'un écart est constaté à un moment t, l'écart est détecté en valeur et les données de capteur (S1, ... ; Sn)(t) d'une mesure successive dans le temps sont à nouveau comparées avec les données de valeur de consigne de la matrice de valeurs de consigne Msollᵢⱼ et avec des données de capteur mesurées auparavant dans le temps
dans lequel dans le cas d'un écart croissant en valeur d'une des données de capteur (S1, ... ; Sn)(t), une allure de courbe est extrapolée au moyen d'une extrapolation à partir des données mesurées, de laquelle il peut être déduit un moment, où les données de capteur (S1, ... ; Sn)(t) dépassent un écart admissible ou quittent une plage de tolérance admissible.

3. Procédé selon la revendication 1 ou 2, dans lequel
les données de capteur du capteur d'oscillations (10) sont détectées et sont comparées avec les données de valeur de consigne enregistrées et dès qu'un écart est constaté à un moment t, l'écart est détecté en valeur et les données de capteur d'une mesure successive dans le temps sont à nouveau comparées avec les données de valeur de consigne et avec des données de capteur mesurées auparavant dans le temps du capteur d'oscillations (10)
dans lequel dans le cas d'un écart croissant en valeur des données de capteur déterminées, une allure de courbe est extrapolée au moyen d'une extrapolation à partir des données mesurées, de laquelle il peut être déduit un moment, où les données de capteur dépassent en valeur un écart admissible ou quittent une plage de tolérance admissible.

4. Procédé selon l'une quelconque des revendications 2 ou 3, dans lequel l'allure de la courbe extrapolée ou les valeurs extrapolées ont été déterminées à partir d'une extrapolation précédente pour une ou toutes les données de capteur sur les valeurs d'écart au moyen d'une mesure discontinue ou continue et détection d'un signal d'oscillation au moyen du capteur d'oscillation (10) et/ou de données de capteur (S1, ... ; Sn)(t) d'un ou de tous les capteurs (S) est comparé avec les données actuellement déterminées et en cas de différences entre les données réelles et les données extrapolées conformément aux données réelles une courbe d'extrapolation adaptée aux données réelles et en particulier des paramètres adaptés de la courbe d'extrapolation théoriques sont calculés et en fonction de cela les paramètres de calcul de la fonction d'extrapolation sont adaptés pour parvenir à une qualité de pronostic améliorée par le fait qu'il est procédé à une nouvelle extrapolation des futures données de capteur avec la fonction d'extrapolation nouvellement calculée.

5. Procédé selon l'une quelconque des revendications précédentes, dans lequel le procédé a lieu pendant le fonctionnement de la machine (10) pendant une cadence de mouvement ou un mouvement discontinu dans un mode de fonctionnement déterminé.

6. Procédé selon l'une quelconque des revendications précédentes, dans lequel
le différentiel temporel ou la première déduction après le temps du signal d'oscillation déterminé lors de la mesure ou d'une grandeur de mesure qui en est déduite est utilisé pour procéder à un pronostic sur le futur état d'une ou plusieurs des parties de machine (M1, ... Mn) respectives ou de leur comportement de fonctionnement, de préférence à un moment déterminé.

7. Procédé selon l'une quelconque des revendications précédentes, dans lequel
l'écart temporel du signal de temps x(t) ou du spectre de fréquences y(f) est utilisé entre deux ou une pluralité de mesures successives dans le temps pour procéder à un pronostic sur l'état actuel et/ou futur d'une ou plusieurs des parties de machine (M1, ..., Mn) respectives ou de leur comportement de fonctionnement.

8. Procédé selon l'une quelconque des revendications précédentes, dans lequel
le signal d'oscillation mesuré est décomposé au moyen d'une transformée, en particulier d'une transformée de Fourier en une série, de préférence une série de Fourier.

9. Procédé selon l'une quelconque des revendications précédentes, dans lequel le comportement d'oscillation de la machine (M) et de ses parties de machine (M1, ..., Mn) est déterminé pour au moins un mode de fonctionnement de la machine d'abord sur une période de temps définie et à partir de là des données de valeur de consigne et/ou des données de modèle pour les parties de machine (M1, ..., Mn) individuelles sont extraites au moyen d'une analyse avec un analyseur (40), de préférence au moyen d'un calcul implémentant un logiciel sous la forme d'un développement de série et sont enregistrées de préférence dans une mémoire (S) pour un état de machine déterminé.

10. Procédé selon l'une quelconque des revendications précédentes, dans lequel en outre un résonateur (40) actif ou passif est prévu, lequel peut être monté localement au niveau de différentes parties de machine (M1, .... Mn) de la machine (M) pour la modification active ou passive de l'oscillation de machine pour permettre à partir de la modification du signal d'oscillation dans sa part d'amplitude ou part de fréquence ou d'une grandeur de calcul qui en est déduite l'affectation à une partie de machine (M1, ..., Mn) déterminée.
